# EUROPÄISCHE PATENTANMELDUNG

(11) **EP 2 096 511 A2**
(43) Veröffentlichungstag der Anmeldung: **02.09.2009**
(21) Anmeldenummer: 09002838.2
(22) Anmeldetag: 27.02.2009
(51) Int. Cl.: G05B 19/05

(54) **Gerätebeschreibungsdatei, System und Verfahren zum Einrichten von Steuer- und/oder Regeleinrichtungen**

(30) Priorität: 01.03.2008 DE 102008012104
(71) Anmelder: ABB AG, 68309 Mannheim (DE)
(72) Erfinder: Kurmann, Lukas, 68130 Franken (FR); Kratz, Annette, Dipl.-Ing., 69259 Wilhelmsfeld (DE)

(57) **Zusammenfassung**

Die Erfindung betriff ein Verfahren zum Einrichten von Steuer- und/oder Regeleinrichtungen (50), insbesondere einer E/A-Einheit und/oder eines Feldgerätes, wobei mittels wenigstens einer Gerätebeschreibungsdatei (14,54) Informationen in wenigstens eine Steuer-/Regeleinrichtung eingelesen und/oder geladen werden, die geladenen Informationen auf für die wenigstens eine Steuer- und/oder Regeleinrichtung (50) ausführbare Programmcodemittel (22,52,56) hin analysiert, ausführbare Programmcodemittel (22,52,56) als solche erkannt und interpretiert und/oder ausgeführt werden und wobei wenigstens einer Steuer-/Regeleinrichtung (50) wenigstens eine bedarfsabhängig vorbestimmbare Funktionalität und/oder Konfiguration aufgeprägt und die jeweilige Steuer-/Regeleinrichtung (50) bedarfsgerecht eingerichtet und/oder konfiguriert wird. Weiterhin wird ein entsprechendes System beansprucht, welches wenigstens ein Zugriffsmittel für den Zugriff auf wenigstens einen ersten Datenspeicher, sowie wenigstens eine Steuer-/Regeleinrichtung (50) umfasst, wobei der wenigstens eine erste Datenspeicher wenigstens eine Gerätebeschreibungsdatei (14,54) mit für wenigstens eine Steuer- und/oder Regeleinrichtung (50) ausführbaren Programmcodemitteln (22,52,56) aufweist, durch welche wenigstens einer Steuer-/Regeleinrichtung eine oder mehrere Funktionen beziehungsweise Funktionalitäten und/oder wenigstens eine vorbestimmbare Konfiguration aufprägbar sind, und wobei im Zusammenwirken von Zugriffsmittel und dem wenigstens einen ersten Datenspeicher die wenigstens eine Gerätebeschreibungsdatei (14,54) in wenigstens eine Steuer-/Regeleinrichtung (50) ladbar und/oder dort ausführbar ist.

## Beschreibung

Die Erfindung betrifft ein System und Verfahren zum Einrichten von Steuer- und/oder Regeleinrichtungen, insbesondere von E/A Steuerungseinheiten sowie Feldbusgeräten, sowie eine demgemäß einsetzbare Gerätebeschreibungsdatei. Das Einrichten betrifft dabei im Wesentlichen das Konfigurieren und/oder Funktionalisieren vorgenannter Einrichtungen, wobei beides insbesondere anwendungsspezifisch und/oder bedarfsabhängig durchführbar ist.

Herkömmlich werden Steuer-/Regeleinrichtungen, wie beispielsweise Feldbusgeräte, mit einem festgelegten, vorbestimmten Funktionsumfang eingesetzt, wobei der Funktionsumfang und damit die Funktionalität im wesentlichen durch die im Festspeicher des Gerätes implementierte Firmware beziehungsweise die implementierte Betriebssystemumgebung, festgelegt wird.

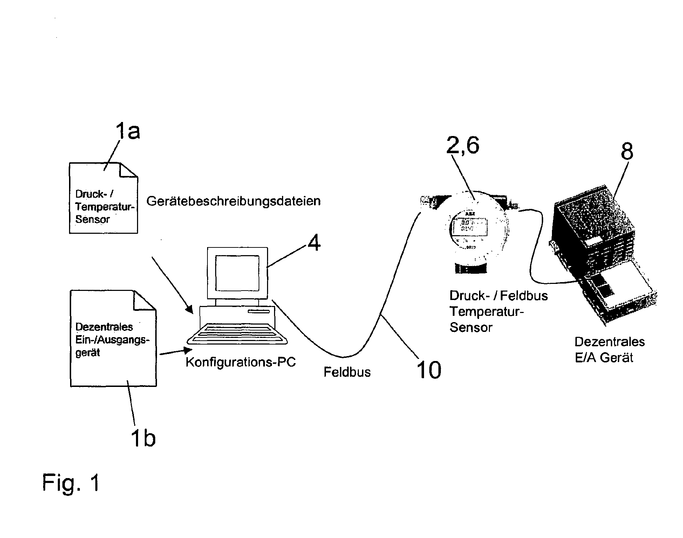

Bekannte Systeme und Verfahren ermöglichen in aller Regel eine Parametrierung von Feldgeräten mittels Konfigurationsdateien, wobei gewisse vorbestimmte Funktionalitäten des jeweiligen Feldgerätes, je nach Bedarf und Einsatzbereich des jeweiligen Gerätes lediglich ein- oder ausschaltbar sind beziehungsweise aktiviert oder deaktiviert werden. Dazu werden, wie in Fig. 1 verdeutlicht, mittels Gerätebeschreibungsdateien über wenigstens eine Datenverarbeitungseinrichtung, welche in Kommunikationsverbindung mit dem jeweiligen Feldgerät steht, Feldgeräteparameterdaten eines ersten Feldgerätes, beispielsweise eines kombinierten Druck- und Temperatursensors, wobei die Parameterdaten dabei insbesondere Druckbereich, Feldbuskommunikationsgeschwindigkeit und dergleichen mehr betreffen können, gesetzt und in einem zweiten Feldgerät, insbesondere einem dezentralen Ein-/Ausgabe-Gerät (E/A-Gerät) eine Parametrierung der E/A-Daten der jeweiligen Kanäle durchgeführt. Diesbezügliche Daten werden dabei in aller Regel in einem nichtflüchtigen Speicher im jeweiligen Feldgerät abgelegt.

Weiterhin sind Systeme und Verfahren bekannt geworden, bei welchen die Feldgeräteparametrierung indirekt über eine zwischengeschaltete - zwischen Datenverarbeitungseinrichtung und erstes Feldgerät geschaltete - Speicherprogrammierbare Steuerung (SPS) erfolgt.

Dabei ist jedoch zu beachten, dass die jeweilig eingesetzte SPS derart konfiguriert ist, dass die SPS bei jedem Hochlauf/Anlauf der jeweiligen Einrichtung die entsprechenden Geräteparameter neu setzt, wodurch diese Geräteparameter nicht mehr in einen nichtflüchtigen Feldgerätespeicherbereich geschrieben werden müssen, und dass das Format der ursprünglichen Gerätebeschreibungsdatei in geänderter Form an die SPS übertragen wird.

In der Regel sind Feldbus und Gerätebeschreibungsdateien vergleichsweise stark miteinander gekoppelt beziehungsweise verknüpft. Beispielsweise werden für Feldgeräte des HART (Highway Addressable Remote Transducer) -Feldbusses oftmals DD (Device Description) - Dateien verwendet, wohingegen für PROFIBUS Feldgeräte GSD ( General Station Description) - Dateien verwendet werden. Dementsprechend sind auch für andere Feldbussysteme jeweils individuelle Dateiformate mit geeigneten Strukturen vorgesehen.

Steuereinrichtungen, wie insbesondere auch Feldgeräte, sind herkömmlich über Gerätebeschreibungsdateien parametrierbar um gewisse, vorbestimmte Funktionalitäten ein- und auszuschalten.

Bei bekannten dezentralen SPS Steuerungen wird dazu üblicherweise ein echtzeitfähiger Bus zwischen den enggekoppelten Steuerungselementen, zum Beispiel bei x-Achsen Bewegungsregelungsanwendungen, insbesondere von Aktoren, verwendet. Die steuernde zentrale SPS wird hier oft nur über einen nicht echtzeitfähigen Bus zur Konfiguration der Gesamtapplikation, insbesondere mittels Gerätebeschreibungsdateien, verwendet.

Bei bekannten zentralen Steuerungen wiederum ist ein echtzeitfähiger Bus zwischen zentraler SPS (Speicherprogrammierbarer Steuerung) und den jeweiligen Steuerungselementen vorhanden, wobei die gesamte Regelung zentral gesteuert ist. Die Steuerungseinheiten dienen hier lediglich als Signalumsetzer zwischen Aktoren und Sensoren. Eine demgemäße, beispielhafte x-Achsen Bewegungsregelungsanwendung sieht vor, dass alle x-Motoren als Aktoren mit jeweils dazugehörenden Drehgebern, den Sensoren, ausgebildet sind, wobei der Regelkreis vollständig zentral in der Hauptsteuerung der SPS abgebildet ist.

Nachteilig ist mittels bekannter Methoden und Anordnungen durch Parametrierung jedoch nur eine wenig flexible und damit auch wenig bedarfsgerechte sowie vergleichsweise eingeschränkte Funktionalisierung und Konfigurierung von Steuer-/Regeleinrichtungen, insbesondere von Feldbusgeräten und E/A Steuerungseinheiten, für einen Einsatz in der Automatisierungsindustrie, erreich- und realisierbar.

Der Erfindung liegt somit die Aufgabe zugrunde eine Möglichkeit für eine effiziente und flexible Einrichtung von Steuer- und/oder Regeleinrichtungen, insbesondere von E/A Steuerungseinheiten oder Feldgeräten, anzugeben.

Diese Aufgabe wird durch ein eingangs genanntes Verfahren zur Einrichtung von Steuer- und/oder Regeleinrichtungen mit den Merkmalen des Anspruchs 1 gelöst. Vorteilhafte Ausgestaltungen und Weiterbildungen des Verfahrens sowie ein entsprechendes System und eine Gerätebeschreibungsdatei sind in weiteren Ansprüchen und der nachfolgenden Beschreibung angegeben.

Beim erfindungsgemäßen Verfahren zum Einrichten von Steuer- und/oder Regeleinrichtungen, insbesondere einer E/A-Einheit und/oder eines Feldgerätes, werden mittels wenigstens einer Gerätebeschreibungsdatei Informationen in wenigstens eine Steuer- und/oder Regeleinrichtung eingelesen und/oder geladen und/oder die geladenen Informationen auf für die wenigstens eine Steuer- und/oder Regeleinrichtung ausführbare Programmcodemittel hin analysiert, ausführbare Programmcodemittel als solche erkannt und interpretiert und/oder ausgeführt und es wird wenigstens einer Steuer- und/oder Regeleinrichtung wenigstens eine bedarfsabhängig vorbestimmbare Funktionalität und/oder Konfiguration aufgeprägt und die jeweilige Steuer-/Regeleinrichtung demgemäß bedarfsgerecht eingerichtet und/oder konfiguriert.

In vorteilhafter Weiterbildung ist vorsehbar, dass durch die eingelesenen Informationen der Gerätebeschreibungsdatei für die jeweilige Steuer-/Regeleinrichtung ausführbare Programmcodemittel bereitgestellt werden.

In einer weiteren Verfahrensausgestaltung werden die eingelesenen Informationen, insbesondere die ausführbaren Programmcodemittel, zumindest anteilig in Binärform und/oder als Dateistruktur mit Einzelparametern oder Parameterarrays bereitgestellt.

Auch können weiterführend die eingelesenen Informationen in einen Datenspeicher des Feldgerätes geladen und/oder in einem persistenten Datenspeicher gespeichert werden.

Verfahrensgemäß ist weiterhin vorsehbar, dass mit jedem erneuten Einlesevorgang die zuvor eingelesenen Informationen überschrieben werden.

In einer Weiterführung des Verfahrens wird die Identifikation und Interpretation eingelesener Informationen als ausführbare Programmcodemittel dadurch bewirkt, dass die ausführbaren Programmcodemittel, insbesondere Anweisungen und/oder Anweisungsfolgen, vorbereitend in einem vorbestimmten Parametersegment der Geräte-Gerätebeschreibungsdatei niedergelegt beziehungsweise abgelegt und/oder bereitgestellt und/oder ausgelesenbeziehungsweise aufgerufen werden.

In einer weiteren Ausführungsform wird der Zeitpunkt der Ausführung des Programmprodukts durch einlesbare Parameter bestimmt.

Verfahrensgemäß ist auch vorsehbar, dass das Laden der Informationen unter Verwendungen eines standardisierten Protokolls, insbesondere EtherCAT, durchgeführt wird.

In einer weiteren vorteilhaften Ausprägung ist vorgesehen, dass die Informationen im Zusammenwirken mit wenigstens einer speicherprogrammierbaren Steuerung und/oder zunächst in wenigstens eine speicherprogrammierbare Steuerung eingelesen werden.

Weiterhin wird die gestellte Aufgabe auch durch ein entsprechendes System gelöst, welches insbesondere zur Ausführung des erfindungsgemäß beispielhaft ausgebildeten Verfahrens vorgesehen ist.

Das System zum Einrichten von Steuer- und/oder Regeleinrichtungen, insbesondere von E/A Steuerungseinheiten und/oder Feldgeräten, umfasst wenigstens ein Zugriffsmittel für den Zugriff auf wenigstens einen ersten Datenspeicher, sowie wenigstens eine Steuer- und/oder Regeleinrichtung, wobei der wenigstens eine erste Datenspeicher wenigstens eine Gerätebeschreibungsdatei mit für die wenigstens eine Steuer- und/oder Regeleinrichtung ausführbaren Programmcodemitteln aufweist, durch welche wenigstens einer Steuer- und/oder Regeleinrichtung eine oder mehrere Funktionen beziehungsweise Funktionalitäten und/oder wenigstens eine vorbestimmbare Konfiguration aufprägbar sind, und wobei im Zusammenwirken von Zugriffsmittel und dem wenigstens einen ersten Datenspeicher die wenigstens eine Gerätebeschreibungsdatei und/oder die ausführbaren Programmcodemittel in wenigstens eine Steuer-/Regeleinrichtung ladbar und/oder dort ausführbar ist.

In einer systemgemäßen Ausgestaltung ist vorgesehen, dass es zur Durch- und/oder Ausführung eines der vorgenannten Verfahren vorgesehen und eingerichtet ist.

In einer weiteren Ausgestaltung ist vorgesehen, dass das Zugriffsmittel als Datenverarbeitungseinrichtung, insbesondere als Mikroprozessor oder Mikrokontroller, ausgestaltet ist und/oder vorteilhaft eine Eingabe- und Anzeigeeinrichtung umfasst, um die Gerätebeschreibungsdatei und/oder die enthaltenen Informationen, insbesondere Parameter, bedarfsgerecht zu erfassen und/oder anzupassen und/oder der jeweiligen Steuer-/Regeleinrichtung aufzuprägen beziehungsweise dieser zu übertragen.

Auch ist vorsehbar, dass die Steuer-/Regeleinrichtung einen Datenspeicher, der insbesondere als persistenter (nichtflüchtiger) Festspeicher oder Festkörper-Speicher ausgebildet ist, umfasst.

In vorteilhafter Weiterbildung ist darüber hinaus vorsehbar, dass innerhalb der Speicherstruktur e in vorgegebener Speicherbereich für einen Bootcode und / oder ein Laufzeitsystem und / oder für Grundfunktionen festgelegt ist.

Auch ist wenigstens ein Datenspeicher vorsehbar, der in das als Miroprozessor oder Mikrokontroller ausgestaltete integrierte Zugriffsmittel der Steuer-/Regeleinrichtung implementiert ist, insbesondere als "embedded flash".

In Weiterbildung des Systems ist wenigstens eine Hardware- und/oder Software-Schnittstelle zum Datenaustausch und zur Kommunikation zwischen wenigstens einem Datenspeicher und dem Zugriffsmittel sowie wenigstens einer Steuer-/Regeleinrichtung vorgesehen, wie insbesondere PCI-Bus, SCSI, USB, Firewire, RS-232.

Alternativ oder ergänzend ist der Datenaustausch auch über Leit- und/oder Feldbussysteme, wie insbesondere RS-485, CAN, CANopen, DeviceNet, EIB, Fieldbus Foundation, Interbus, LCN (Local Control Network), Modbus, Profibus, SERCOS Interface, TTP, sowie auch Ethernet oder Realtime-Ethernet, wie insbesondere EtherCAT, Ethernet-Powerlink, Profinet, Ethernet/IP oder auch Industrial Ethernet sowie gegebenenfalls eine Kombinationen daraus bewirkbar.

Die Steuer- und/oder Regeleinrichtung kann dabei als Feldgerät ausgebildet sein.

Systemgemäß ist vorteilhaft vorsehbar, dass die eingesetzte Gerätebeschreibungsdatei eine Datenstruktur mit wenigstens zwei Parametersegmenten aufweist, wobei in zumindest einem Segment ein Parametersatz zum Parametrieren der jeweiligen Steuer- und/oder Regeleinrichtung und in zumindest einem Segment ein Parametersatz mit ausführbaren Programmcodemitteln, insbesondere in Binärcode, vorgesehen und/oder enthalten ist.

Die für die jeweilige Steuer- und/oder Regeleinrichtung ausführbaren Programmcodemittel können in einer Weiterbildung des Systems, neben dem eigentlichen Programm, insbesondere Anweisungen und/oder Anweisungsfolgen, auch Programmdaten sowie Angaben bezüglich der jeweiligen Eingangs- und/oder Ausgangsdaten enthalten.

Vorsehbar ist weiterhin, dass die Programmcodemittel eine Funktionalität, eine Programmierumgebung und / oder eine Speicherprogrammierbare Steuerung umfassen und/oder aufprägen.

In vorteilhafter Ausführung ist ein Echtzeitbetriebssystem bereitgestellt und in der jeweiligen Steuer- und/oder Regeleinrichtung, insbesondere einer E/A-Steuerungseinheit und/oder einem Feldgerät, ausgeführt, welches für die Feldbuskommunikation und/oder das Ausführen der durch die Gerätebeschreibungsdatei bereitgestellten Programmcodemittel, insbesondere zyklisch oder antizyklisch, und/oder das korrekte Verknüpfen der Eingangs- und Ausgangsdaten der Programmcodemittel mit dem Laufzeitsystem und/oder die Behandlung der Geräteparameter zuständig und verantwortlich ist, sowie die diese handhabt.

Auch eine Gerätebeschreibungsdatei zum Einrichten von Steuer- und/oder Regeleinrichtungen trägt zur Lösung der gestellten Aufgabe bei, wobei diese Gerätebeschreibungsdatei eine Datenstruktur mit wenigstens zwei Parametersegmenten aufweist und wobei in zumindest einem Segment ein Parametersatz zum Parametrieren der jeweiligen Steuer- und/oder Regeleinrichtung und in zumindest einem Segment ein Parametersatz mit für die Steuer- und/oder Regeleinrichtung ausführbaren Programmcodemitteln, insbesondere in Binärcode, vorgesehen und/oder enthalten ist.

In vorteilhafter Ausgestaltung ist vorgesehen, dass die ausführbaren Programmcodemittel neben dem eigentlichen Programm, insbesondere Anweisungen und/oder Anweisungsfolgen, auch Programmdaten sowie Angaben bezüglich der jeweiligen Eingangs- und/oder Ausgangsdaten enthalten.

Die weitere Darlegung der Erfindung sowie vorteilhafter Ausgestaltungen und Weiterbildungen erfolgt anhand einiger nachfolgend angegebenen Figuren und Ausführungsbeispiele.

Es zeigen:
Fig. 1 bekannter Feldgerätekonfigurationsaufbau,
Fig. 2 bekannter Feldgerätekonfigurationsaufbau mit zwischengeschalteter SPS,
Fig. 3 beispielhaft ausgebildete erfindungsgemäße Gerätebeschreibungsdatei,
Fig. 4 beispielhaft ausgeführte Erstellung der zur Einrichtung einer Steuerungseinheit erfindungsgemäß erforderlichen Programmcodemittel,
Fig. 5 ein einem Feldgerät erfindungsgemäß aufgeprägtes beispielhaft ausgebildetes ausführbares Programm beziehungsweise entsprechende Programmcodemittel,
Fig. 6 mittels Gerätebeschreibungsdatei programmtechnisch beispielhaft ausgebildetes Nockenschaltwerk,
Fig. 7 mittels Gerätebeschreibungsdatei programmtechnisch beispielhaft ausgebildete Kommunikationsdatenverknüpfung,
Fig. 8 beispielhafte Fabrikautomation.
   In Fig. 1 ist ein herkömmlicher Feldgerätekonfigurationsaufbau gezeigt. Gerätebeschreibungsdateien 1 a, 1 b, welche über einen Konfigurations-PC 4 in angeschlossene Feldgeräte 6 Parameterdaten in kombiniertem Druck- und Temperatur-Sensor 2, zum Beispiel betreffend Druckbereich, Feldbuskommunikationsgeschwindigkeit, usw. setzt und im zweiten Feldgerät, ein dezentrales Ein-/Ausgabe Gerät (E/A Gerät) 8, die Ein- und Ausgangs-Daten Parametrierung der einzelnen Kanäle durchführt. Oft werden solche Daten in einem nichtflüchtigen Speicher im Feldgerät 6,8 abgelegt. Die Kommunikation zwischen erstem Feldgerät 6 und zweitem Feldgerät 8 erfolgt über einen Feldbus 10.

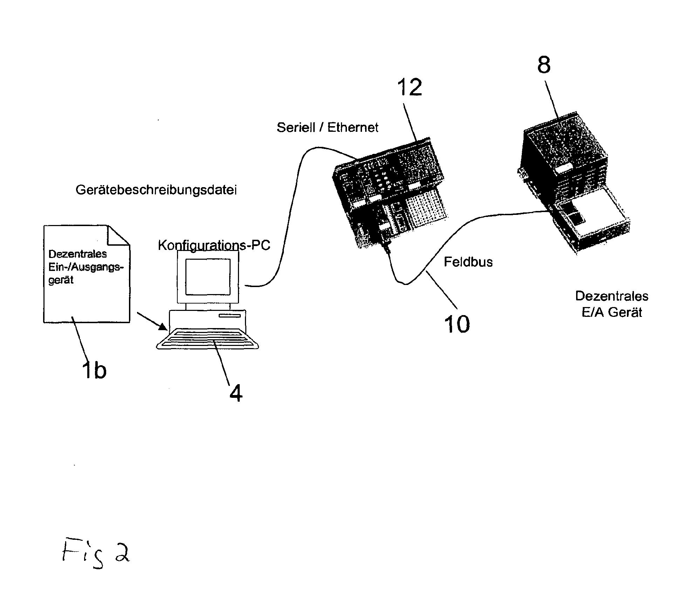

   In Fig. 2 ist ein zu Fig. 1 ähnlicher Aufbau gezeigt, wobei davon abweichend die Feldgeräteparametrierung und damit Konfigurierung indirekt mittels zwischengeschalteter SPS 12 durchgeführt wird. Im Übrigen wird auf die Beschreibung zu Fig. 1 verwiesen.

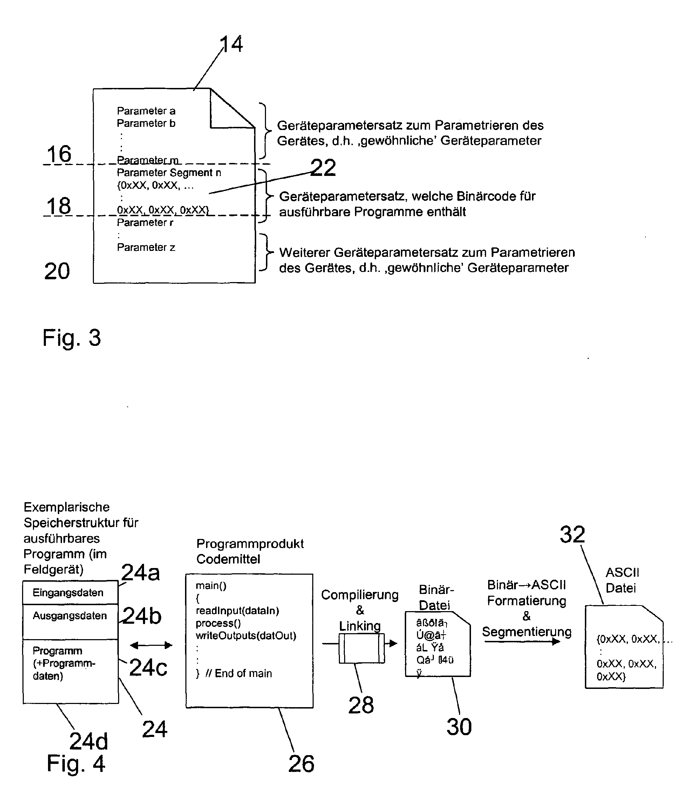

   In Fig. 3 ist eine beispielhaft ausgebildete erfindungsgemäße Gerätebeschreibungsdatei 14 angegeben, welche in einzelne Parametersegmente 16,18,20 strukturiert ist und in welcher zumindest ein zweites Parametersegment 16 zur Aufnahme, insbesondere Speicherung, eines jeweilig ausführbaren Programms 22- Programmcodemittel in binärform -, welcher direkt von der jeweiligen Steuer-/Regeleinrichtung, insbesondere von deren Mikroprozessor, verarbeitbar ist. Darüber hinaus ist in wenigstens ein weiteres, erstes Parametersegment 16, 20 vorgesehen, in welchem auch der zugehörige Parametersatz zum Konfigurieren der jeweiligen Steuer-/Regeleinrichtung abgelegt ist. In Kombination mit einer Echtzeit Ethernet Protokoll Variante , wie beispielsweise EtherCAT' und vorhandener ,Slave to Slave' Kommunikation können darauf basierend äußerst flexible Steuerungen - hier speziell Regelungskreise- realisiert werden, in welchen die jeweiligen Applikationen und/oder Anwendungen sowie demgemäße Funktionalitäten in den abgesetzten Steuer-/Regelungseinheiten beziehungsweise -einrichtungen geladen und gleichzeitig, in nur einer Arbeitseinheit beziehungsweise einem einzigen Arbeits- oder Verfahrensschritt, parametriert und damit konfiguriert werden.
   Die Parameter im zweiten Segment n 18 der Gerätebeschreibungsdatei 14, welche hexadezimal gekennzeichnet sind als 0xXX, bilden ein ausführbares Programm 22 in binärform, welches in byte Felder segmentiert beziehungsweise aufgegliedert ist und welches im Voraus auf einer Datenverarbeitungseinrichtung, insbesondere einem Personal Computer (PC) erzeugt beziehungsweise generiert wurde.
   Die jeweiligen Parameter des Parametersegments n 18 können dabei sowohl als Einzelparameter oder als Array beziehungsweise Matrix in der Gerätebeschreibungsdatei aufgenommen und/oder angegeben sein - je nachdem was durch das Dateiformat der jeweiligen Gerätebeschreibungsdatei 14 unterstützt wird. Falls die Gerätebeschreibungsdatei nur Einzelparameter unterstützt, sind Mittel vorzusehen, um zu gewährleisten, dass während des Ladens der jeweiligen Gerätebeschreibungsdatei ins Feldgerät dafür gesorgt wird, dass diese Einzelparameter in korrekter Reihenfolge zusammengesetzt und in einem Bereich des jeweiligen Mikroprozessorspeichers derart abgelegt sind, das dieses Parameterfeld, bzw. das ausführbare Programm zum gegebenen Zeitpunkt ausgeführt werden können. Der Zeitpunkt der Programmausführung ist jedoch auch mit ,gewöhnlichen' Geräteparametern hinreichend genau festlegbar. Dies gilt selbstverständlich auch im Falle eines Parameterarrays, nur ist in diesem Fall die Reihenfolge des Einlesens der Parameter vorgegeben beziehungsweise vorbestimmt. Dabei ist ein Parameterfeld eine geeignetere und/oder bevorzugte Art ausführbare Programmcodemittel zu speichern, wobei nicht alle Gerätebeschreibungsarten beziehungsweise nicht alle Gerätebeschreibungsdateiformate eine solche Funktion erlauben beziehungsweise unterstützen.
   In Fig. 4 ist beispielhaft eine Erstellung der zur Einrichtung einer Steuerungseinheit erfindungsgemäß erforderlichen Programmcodemittel 22 gezeigt.
   Damit die auszuführenden Programmcodemittel, insbesondere ausführbare Anweisungen in einer gängigen Programmiersprache 26, in der jeweiligen Steuer-/Regeleinrichtung und/oder im jeweiligen Feldgerät ausführbar sind, ist zuvor eine Speicherstruktur 24 festzulegen und/oder vorzusehen, in welcher die verschiedenen Datensegmente der jeweiligen Datei, im hier gezeigten Beispiels Parametersegmente einer Gerätebeschreibungsdatei, definiert und vorbereitet wurden für Eingangs-24a sowie Ausgangsdaten 24b, Programmcode 24c und gegebenenfalls Programmdaten 24d beziehungsweise programmbezogene Daten, damit der Einsprung in das auszuführende Programm vom Laufzeitsystem (LZS) auch korrekt durchführbar beziehungsweise bewirkbar ist, wie in Fig. 4 verdeutlicht.
   Dabei ist ein beliebiges, gängiges Programmierwerkzeug 28, wie beispielsweise GNU, .NET oder dergleichen einsetzbar, um ausführbare Programmcodemittel zu generieren beziehungsweise zu erstellen und/oder demgemäß den jeweiligen Programmcode zu compilieren, zu linken (zu verknüpfen) und letztlich in eine Binärdatei 30, vorzugsweise im ASCII-Format 32, umzuwandeln.

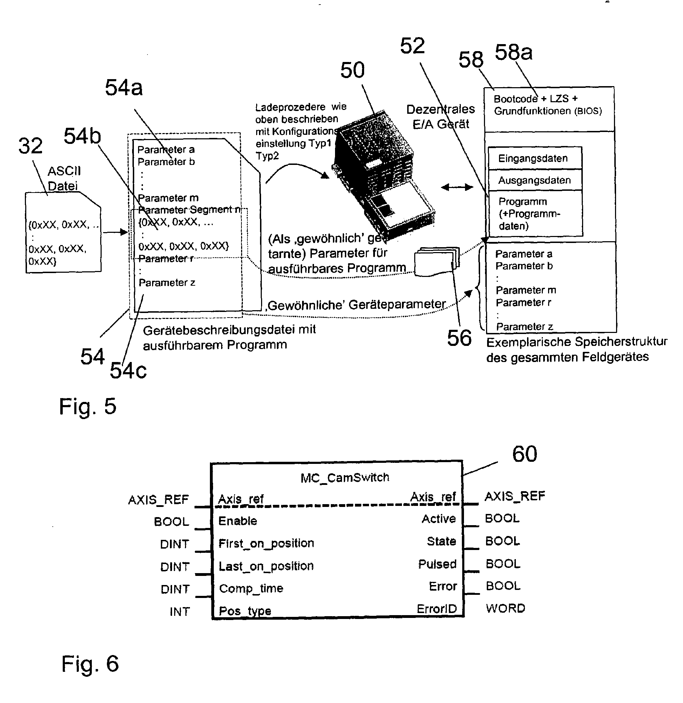

   In Fig. 5 ist eine einem Feldgerät 50 aufgeprägte erfindungsgemäß ausgestaltete Gerätebeschreibungsdatei im ASCII-Format 54 angegeben, welche im Wesentlichen drei Parametersegmente 54a,b,c aufweist. Das erste Parametersegment 54a umfasst dabei die Parameter a bis m, das dritte Parametersegment 54c die Parameter r bis z. Das zweite Parametersegment 54b umfasst ein beispielhaft ausgebildetes ausführbares Programm beziehungsweise entsprechende ausführbare Programmcodemittel in Form vermeintlich gewöhnlicher Parameter 56, wobei das jeweilige Echtzeitbetriebssystem 58, welches im Feldgerät 50 ausgeführt wird, beispielhaft für die nachfolgenden Funktionen beziehungsweise Funktionalitäten zuständig ist:
   a) Feldbuskommunikation
   b) Ausführen des eingebetteten Programms (zyklisch oder azyklisch)
   c) Korrektes Verknüpfen der Eingangs- und Ausgangsdaten im eingebetteten oder aufgeprägtem Programm mit dem Laufzeitsystem
   d) Behandlung der Geräteparameter
   Dabei bedienen die Parameter a bis m des ersten Segmentes 24a direkt die jeweiligen Gerätegrundfunktionen, wie insbesondere Basic Input Output System (BIOS) bedienen, wie beispielsweise die Kommunikationsgeschwindigkeit, Datenübertragungsrate, Adressierung und dergleichen.
   Die Parameter des zweiten Segmentes 24b, wenn solche angegeben sind, werden zur Konfiguration des jeweiligen ausführbaren Programms eingesetzt beziehungsweise bewirken eine entsprechende Konfiguration des jeweilig ausführbaren Programms und/oder der Programmcodemittel.
   Beim Verfahren zum Einrichten von Steuer- und/oder Regeleinrichtungen, insbesondere einer E/A-Einheit und/oder eines Feldgerätes, werden mittels wenigstens einer Gerätebeschreibungsdatei 54 Informationen in wenigstens eine Steuer- und/oder Regeleinrichtung 50 eingelesen und/oder geladen und die geladenen Informationen auf für die wenigstens eine Steuer- und/oder Regeleinrichtung 50 ausführbare Programmcodemittel hin analysiert, ausführbare Programmcodemittel als solche erkannt und interpretiert und/oder ausgeführt und wenigstens einer Steuer-/Regeleinrichtung 50 wenigstens eine bedarfsabhängig vorbestimmbare Funktionalität und/oder Konfiguration aufgeprägt, wodurch die wenigstens eine Steuer-/Regeleinrichtung bedarfsgerecht eingerichtet und/oder konfiguriert wird.
   Beispielhaft soll ein an einem Feldbus angeschlossenes Feldgerät 50 verfahrensgemäß um eine vorbestimmte Funktionalität erweitert werden, beispielsweise um die eines elektronischen Nockenschaltwerkes 60. Durch ein Nockenschaltwerk, wie beispielhaft in Fig. 6 gezeigt, werden verschiedenen Kombinationen von an den Eingängen des Feldgerätes 50 anliegenden Daten und/oder Signale ausgewertet und gemäß einer vorgegebenen Logik Ausgangsdaten und/oder Signale ermittelt, welche an den Ausgängen des Feldgerätes 50 auslesbar und/oder abgreifbar sind und auch auf den Feldbus gelegt werden können.
   Die die gewünschte Funktionalität umsetzenden Programmcodemittel 52 werden über die jeweilig vorgesehenen Kommunikationsmöglichkeiten des Feldgerätes 50 mittels einer Gerätebeschreibungsdatei 54 in dessen Speicher übertragen, wobei sich die Kommunikationsmöglichkeiten üblicherweise auf die Kommunikation mit dem Feldbus beschränken. Die für eine Übertragung über den Feldbus in das Feldgerät 50 vorgesehene Gerätebeschreibungsdatei 54 weist eine fest vorgegebene Daten-oder Informationsstruktur auf, wie sie ähnlich auch beispielsweise in GSD-Dateien zu finden sind. In diesen Dateien sind feste Bereiche und/oder Segmente 24a,b,c für Parameter vorgegeben, welche üblicherweise lediglich bereits vorhandene Funktionalitäten eines Feldgerätes 50 beeinflussen/anpassen und/oder an- bzw. abschalten können.
   Zur Erweiterung der Funktionalität des jeweiligen Feldgerätes 50 wird verfahrensgemäß vorbereitend zunächst eine an das jeweilige Feldgerät 50 zu übertragende Gerätebeschreibungsdatei 54 mit vorbestimmter Datenstruktur, insbesondere mit wenigstens zwei Parametersegmenten54a,b,c, wovon wenigstens eines entsprechende Programmcodemittel 56 zur Umsetzung der jeweiligen Funktionalität aufweist, erstellt und für die Übertragung an ein oder mehrere Feldgeräte 50 vorgesehen. Diese Gerätebeschreibungsdatei 54 umfasst beispielhaft die Parameter a bis z, wobei exemplarisch der Parameter n einem Datensegment 54b zugeordnet ist, welches ausführbare Programmcodemittel 56 aufweist, der beziehungsweise welche das Feldgerät 50 um die gewünschte Funktionalität erweitert. Der ausführbare Programmcode beziehungsweise die ausführbaren Programmcodemittel 56 werden vorbereitend mittels beispielsweise eines Programmierwerkzeuges wie insbesondere einem Compiler aus dem zugehörigen Quelltext erstellt und mittels eines geeigneten Formatierungswerkzeuges zusammen mit möglichen Geräteparametern in die gewünschte Gerätebeschreibungsdatei 54 überführt.
   Die jeweilige Gerätebeschreibungsdatei 54 wird verfahrensgemäß über den Feldbus an das betreffende Feldgerät 50 übermittelt und in dessen Arbeitsspeicher geladen und/oder dem jeweiligen Feldgerät 50 aufgeprägt. Für die Übermittlung ist insbesondere ein am Feldbus angeschlossener zentraler Steuerrechner als Zugriffsmittel einsetzbar.
   Hierbei wird eine entsprechende Speicherstruktur auch des Feldgerätes 50 zu Grunde gelegt, um die in der Gerätebeschreibungsdatei 54 enthaltenen beziehungsweise von diesem bereitgestellten Informationen in gewünschter Weise im Speicher abzulegen.
   Diese Struktur umfasst dabei beispielsweise vordefinierte Speicherbereiche für Eingangsdaten 52a, Ausgangsdaten 52b und auf der jeweiligen Steuer- und/oder Regeleinrichtung ausführbare Programmcodemittel 52c, welche mit der Struktur der übertragenen Gerätebeschreibungsdatei 54 grundlegend übereinstimmen.
   Alternativ dazu ist verfahrensgemäß eine strukturbasierte Analyse und Selektion durch die Steuer- und/oder Regeleinrichtung ausführbarer Programmcodemittel 56 durchführbar.
   Je nach verwendeter Datenstruktur ist ein ausführbarer Programmcode 56 auch über eine Vielzahl von Einzelparametern verteilt und/oder in dem Speicher des Feldgerätes 50 gemäß einem entsprechenden Algorithmus in einer konsistenten Reihenfolge ablegbar oder abgelegt.
   Die geladenen, ausführbaren Programmcodemittel 56 sind üblicherweise durch Parameter bestimmt, welche ebenfalls in der übertragenen Datei 54 enthalten sein können.
   Die Ausführung des geladenen Programmcodes 52 wird beispielsweise durch ein Echtzeitbetriebssystem 58a des Feldgerätes 50 bestimmt, wobei sowohl eine zyklische als auch eine azyklische Ausführung denkbar ist. Die Parameter für die Ausführung des Programmcodes können ebenfalls als Parameter in derselben Datei 54 wie der Programmcode 52 übermittelt werden. Bei einer zyklischen Ausführung des oben beschriebenen elektronischen Nockenschaltwerkes 60 würde in einem festen Zeitintervall anhand von anliegenden Eingangsdaten bzw. Eingangssignalen entsprechende Ausgangsgrößen ermittelt und über den Feldbus anderen Feldbusteilnehmern zur Verfügung gestellt werden.
   In einer weiteren Verfahrensausprägung bildet die ausführbaren Programmcodemittel 56 der Grätebeschreibungsdatei 54 keine eigentliche Funktionalität eines Feldgerätes 50, sondern ausgewählte Funktionalitäten einer SPS (Speicherprogrammierbaren Steuerung) ab. Diese Funktionalitäten einer SPS ermöglichen dem Feldgerät 50 die Abarbeitung weiterhin geladener Programmcodemittel 52 beziehungsweise eines entsprechenden Programmproduktes, wobei diese nicht in einer binären direkt ausführbaren Form vorliegen muss, dessen in ihm enthaltene Anweisungen vielmehr von der geladenen SPS Funktionalität interpretiert werden.
   Als Beispiel eines ausführbaren Programms beziehungsweise entsprechender Programmcodemittel sei ein Nockenschaltwerk 60 genannt, welches über eine Gerätebeschreibungsdatei 54 in ein dezentrales Ein/Ausgabe-Modul ladbar ist. Ein solches Funktionsmodul, wäre somit in ,Hardware' gegossen. Zu jedem solchen Funktionsmodul, hier beispielhaft ein Nockenschaltwerk 60, ist ein dazugehörender Funktionsblock in der verwendeten IEC61131 Programmier-Umgebung vorgesehen, wie in Fig. 6 gezeigt:

Ein solches Funktionselement beziehungsweise Funktionsmodul kann mit der Hauptsteuerung SPS direkt und mit kürzesten Ansprechzeiten angesprochen und gesteuert werden.

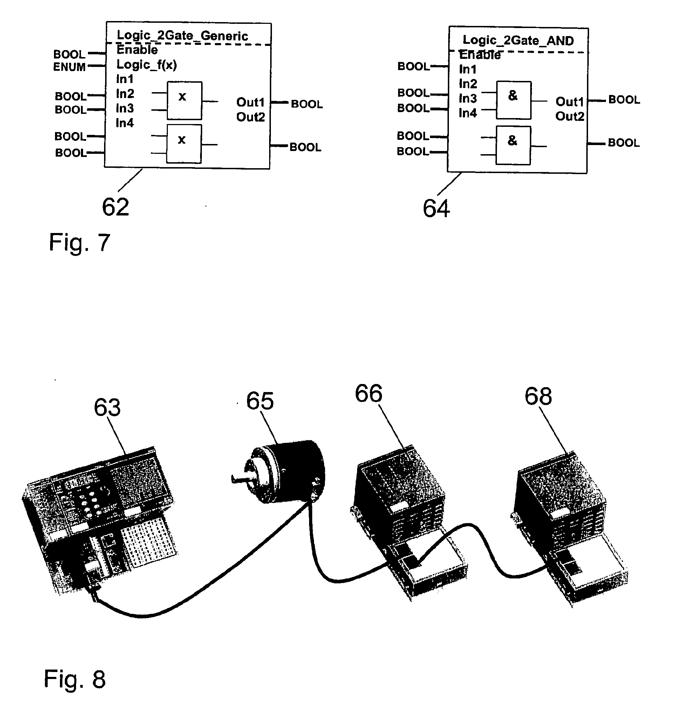

Als weiteres Beispiel sei hier ein ausführbares Programm genannt, welches auf Grund eines von der Hauptsteuerung gesendeten Datenpaketes, wobei die Versendung zyklisch oder azyklisch durchführbar ist, vorbestimmbare Ein- und/oder Ausgänge logisch miteinander verknüpft. Demgemäß beispielhaft ausgebildete Logikbausteine 62, 64 nach IEC61131 zur Kommunikationsdatenverknüpfung sind in Fig. 7 angegeben.

In Fig. 8 ist eine beispielhafte Fabrikautomation gezeigt, wobei über digitale Ausgangskanäle entsprechend dem eingelesenen Drehwinkel eines Drehgebers 63 Ventile 65 schaltbar sind. Das jeweils ausführbare Programm beziehungsweise die entsprechenden Programmcodemittel, hier beispielhaft ein Nockenschaltwerk mit insbesondere je 4 Nocken/Spur und 8 Spuren, in den zwei dargestellten E/A 66,68 Geräten ist sehr flexibel programmier- und/oder einricht- sowie konditionierbar. Falls vier Nocken auf einer Spur nicht genügen sollten, kann durch eine demgemäße Programmanpassung auf einfachste Art und Weise die Nockenanzahl pro Spur erhöht werden.

Alternativ dazu, lediglich nur das jeweilige ausführbare Programm über die Gerätebeschreibungsdatei in einen Sensor oder in ein dezentrales E/A Modul zu laden, wie auch in Fig. 5 gezeigt, ist der Binärcode einer IEC61131 Programmierumgebung vorteilhaft auch direkt ladbar oder und/oder aufprägbar, ohne über weitere proprietäre Programmierwerkzeuge zunächst eine Binärcode-Parameterliste für die Gerätebeschreibungsdatei zu generieren. Dies setzt allerdings voraus, dass in einem Sensor oder E/A Modul zusätzlich auch ein dazugehörendes Laufzeitsystem (LZS), bzw.

Echtzeitbetriebssystem vorhanden ist, womit auch die Unterscheidung zwischen Hauptsteuerungs-SPS und dezentraler Steuerung verwischt ist beziehungsweise überholt ist.

Darüber hinaus ist vorteilhaft vorsehbar, dass das ausführbare Programm oder die Applikation nicht nur das generierte IEC61131 Programm umfasst, sondern zusätzlich auch eine weitere SPS abbildet, welche - ähnlich wie die Hauptsteuerung SPS - dafür eingerichtet ist IEC61131 Programme auszuführen.

Die Ausführungszeiten im Sensor oder E/A Modul der verschiedenen Varianten beziehungsweise Ausführungsformen - Binärdatei direkt erzeugt mit proprietären Programmierentwicklungswerkzeugen und selbstdefinierter Speicheraufteilung oder erzeugter Binärcode über Standard IEC61131 Entwicklungsumgebung und LZS (Laufzeitsystem) im Gerät fest vorhanden oder erzeugter Binärcode über Standard IEC61131 Entwicklungsumgebung zuzüglich des LZS in der Gerätebeschreibungsdatei unterscheiden sich dabei nur geringfügig.

Nachteilig wäre allerdings die Komplexität und Größe der Beschreibungsdatei der letzten Ausführungsvariante beziehungsweise -alternative erheblich.

In einer vorteilhaften Ausgestaltung ist weiterhin vorsehbar, dass die zwei abgesetzten E/A Module als sekundäre, beziehungsweise tertiäre SPS konfiguriert werden oder sind.

Dies ist nur eine Applikation aus einer sehr großen Vielzahl von möglichen Applikationen. Um die Reaktionsgeschwindigkeit erhöhen zu können, ist insbesondere ein Echtzeitbus Typ EtherCAT mit Querkommunikation und Verteilten Uhren wählbar..

Die Vorteile der erfindungsgemäßen Lösung gegenüber zentralen und dezentralen SPS Steuerungen begründen sich unter Anderem darin, dass vergleichsweise sehr komplexe und sehr schnelle Applikationsstrukturen ermöglicht sind, wobei Komplexität sehr einfach skalierbar ist. Speziell ist hier die immense Flexibilität kombiniert mit einer sehr hohen Ausführungsgeschwindigkeit der jeweiligen Applikationen gegenüber herkömmlichen rein dezentralen und zentralen SPS Steuerungen hervorzuheben.

## Patentansprüche

1. Verfahren zum Einrichten von Steuer- und/oder Regeleinrichtungen (50), insbesondere einer E/A-Einheit und/oder eines Feldgerätes, wobei mittels wenigstens einer Gerätebeschreibungsdatei (14,54) Informationen in wenigstens eine Steuer-und/oder Regeleinrichtung (50) eingelesen und/oder geladen werden und/oder die geladenen Informationen auf für die wenigstens eine Steuer- und/oder Regeleinrichtung (50) ausführbare Programmcodemittel (22,52,56) hin analysiert, ausführbare Programmcodemittel (22,52,56) als solche erkannt und interpretiert und/oder ausgeführt werden und wobei wenigstens einer Steuer- und/oder Regeleinrichtung (50) wenigstens eine bedarfsabhängig vorbestimmbare Funktionalität und/oder Konfiguration aufgeprägt und die jeweilige Steuer-/Regeleinrichtung bedarfsgerecht eingerichtet und/oder konfiguriert wird.

2. Verfahren nach Anspruch 1, **dadurch gekennzeichnet, dass** durch die eingelesenen Informationen der Gerätebeschreibungsdatei (14,54) für die jeweilige Steuer-/Regeleinrichtung (50) ausführbare Programmcodemittel (22,52,56) bereitgestellt werden.

3. Verfahren nach einem der vorherigen Ansprüche, **dadurch gekennzeichnet, dass** die eingelesenen Informationen in einen Datenspeicher des Feldgerätes (50) geladen und/oder in einem persistenten Datenspeicher gespeichert werden.

4. Verfahren nach einem der vorgenannten Ansprüche, **dadurch gekennzeichnet, dass** eine Identifikation und Interpretation eingelesener Informationen als ausführbaren Programmcodemittel (22,52,56) bewirkt wird, indem die ausführbaren Programmcodemittel, insbesondere Anweisungen und/oder Anweisungsfolgen, in einem vorbestimmten Parametersegment (18,54b) der Gerätebeschreibungsdatei (14,54) niedergelegt und/oder abgelegt werden.

5. Verfahren nach einem der vorgenannten Ansprüche, **dadurch gekennzeichnet, dass** der Zeitpunkt der Ausführung des Programmprodukts durch einlesbare Parameter bestimmt wird.

6. Verfahren nach einem der vorgenannten Ansprüche, **dadurch gekennzeichnet, dass** die Informationen im Zusammenwirken mit wenigstens einer speicherprogrammierbaren Steuerung und/oder zunächst in wenigstens eine speicherprogrammierbare Steuerung eingelesen werden.

7. System zum Einrichten von Steuer- und/oder Regeleinrichtungen (50), insbesondere von E/A Steuerungseinheiten und/oder Feldgeräten, welches wenigstens ein Zugriffsmittel für den Zugriff auf wenigstens einen ersten Datenspeicher, sowie wenigstens eine Steuer- und/oder Regeleinrichtung (50), insbesondere ein Feldgerät, umfasst, wobei der wenigstens eine erste Datenspeicher wenigstens eine Gerätebeschreibungsdatei (14, 54) mit für wenigstens eine Steuer- und/oder Regeleinrichtung (50) ausführbaren Programmcodemitteln (22,52,56) aufweist, durch welche wenigstens einer Steuer-/Regeleinrichtung eine oder mehrere Funktionen beziehungsweise Funktionalitäten und/oder wenigstens eine vorbestimmbare Konfiguration aufprägbar sind, und wobei im Zusammenwirken von Zugriffsmittel und dem wenigstens einen ersten Datenspeicher die wenigstens eine Gerätebeschreibungsdatei (14,54) und/oder deren ausführbare Programmcodemittel (22,52,56) in wenigstens eine Steuer- und/oder Regeleinrichtung (50) ladbar und/oder dort ausführbar ist.

8. System nach Anspruch 7, **dadurch gekennzeichnet, dass** es zur Durch- und/oder Ausführung eines Verfahrens nach einem der Ansprüche 1 bis 6 vorgesehen und eingerichtet ist.

9. System nach einem der Ansprüche 7 bis 8, **dadurch gekennzeichnet, dass** die Steuer-/Regeleinrichtung einen Datenspeicher, der insbesondere als persistenter (nichtflüchtiger) Festspeicher oder Festkörper-Speicher ausgebildet ist umfasst.

10. System nach einem der Ansprüche 7 bis 8, **dadurch gekennzeichnet, dass** wenigstens eine Hardware- und/oder Software-Schnittstelle zum Datenaustausch und zur Kommunikation zwischen wenigstens einem Datenspeicher und dem Zugriffsmittel sowie wenigstens einer Steuer-/Regeleinrichtung (50) vorgesehen ist, wie insbesondere PCI-Bus, SCSI, USB, Firewire, RS-232.

11. System nach Anspruch 10, **dadurch gekennzeichnet, dass** der Datenaustausch auch über Leit- und/oder Feldbussysteme, wie insbesondere RS-485, CAN, CANopen, DeviceNet, EIB, Fieldbus Foundation, Interbus, LCN (Local Control Network), Modbus, Profibus, SERCOS Interface, TTP, sowie auch Ethernet oder Realtime-Ethernet, wie insbesondere EtherCAT, Ethernet-Powerlink, Profinet, Ethernet/IP oder auch Industrial Ethernet sowie gegebenenfalls eine Kombinationen daraus bewirkt ist.

12. System nach einem der Ansprüche 7 bis 11, **dadurch gekennzeichnet, dass** die eingesetzte Gerätebeschreibungsdatei (14,54) eine Datenstruktur mit wenigstens zwei Parametersegmenten (16,18,20; 54a,54b,54c) aufweist, wobei in zumindest einem Segment ein Parametersatz (16,20;54a,54c) zum Parametrieren der jeweiligen Steuer- und/oder Regeleinrichtung (50) und in zumindest einem Segment ein Parametersatz (18,54b) mit ausführbaren Programmcodemitteln (22,52,56), insbesondere in Binärcode (30,32), vorgesehen und/oder enthalten ist.

13. System nach einem der Ansprüche 7 bis 12, **dadurch gekennzeichnet, dass** die ausführbaren Programmcodemittel (22,52,56) neben dem eigentlichen Programm, insbesondere Anweisungen und/oder Anweisungsfolgen, auch Programmdaten sowie Angaben bezüglich der jeweiligen Eingangs- und/oder Ausgangsdaten enthalten sind.

14. System nach einem der vorherigen Ansprüche 7 bis 13, **dadurch gekennzeichnet, dass** ein Echtzeitbetriebssystem bereitgestellt und in der jeweiligen Steuer- und/oder Regeleinrichtung (50), insbesondere einer E/A-Steuerungseinheit und/oder einem Feldgerät, ausgeführt ist und für die Feldbuskommunikation und/oder das Ausführen der durch die Gerätebeschreibungsdatei (14,54) bereitgestellten Programmcodemittel (22,52,56), insbesondere zyklisch oder antizyklisch, und/oder das korrekte Verknüpfen der Eingangs- und Ausgangsdaten der Programmcodemittel mit dem Laufzeitsystem und/oder die Behandlung der Geräteparameter zuständig und verantwortlich ist, sowie die diese handhabt.

15. Gerätebeschreibungsdatei (14,54) zum Einrichten von Steuer- und/oder Regeleinrichtungen (50), welche eine Datenstruktur mit wenigstens zwei Parametersegmenten aufweist, wobei in zumindest einem Segment (16,20;54a,54c) ein Parametersatz zum Parametrieren der jeweiligen Steuer- und/oder Regeleinrichtung (50) und in zumindest einem Segment (18,54b) ein Parametersatz mit für die Steuer-und/oder Regeleinrichtung (50) ausführbaren Programmcodemitteln (22,52,56), insbesondere in Binärcode (30,32), vorgesehen und/oder enthalten ist.

16. Gerätebeschreibungsdatei (14,54) nach Anspruch 15, **dadurch gekennzeichnet, dass** die ausführbaren Programmcodemittel (22,52,56) neben dem eigentlichen Programm, insbesondere Anweisungen und/oder Anweisungsfolgen, auch Programmdaten sowie Angaben bezüglich der jeweiligen Eingangs- (24a) und/oder Ausgangsdaten (24b) enthalten sind.
